# EUROPÄISCHE PATENTANMELDUNG

(11) **EP 4 083 831 A1**
(43) Veröffentlichungstag der Anmeldung: **02.11.2022**
(21) Anmeldenummer: 21171637.8
(22) Anmeldetag: 30.04.2021
(51) Int. Cl.: G06F 21/33, H04L 29/06, H04L 9/32

(54) **DIGITALES ZERTIFIKAT**

(71) Anmelder: Siemens Aktiengesellschaft, 80333 München (DE)
(72) Erfinder: Aschauer, Dr. Hans, 81829 München (DE); De Santis, Dr. Fabrizio, 80634 München (DE); Falk, Dr. Rainer, 85586 Poing (DE); Furch, Dr. Andreas, 85354 Freising (DE); Schneider, Daniel, 80796 München (DE); Zeschg, Thomas, 81543 München (DE)

(57) **Zusammenfassung**

Die Erfindung betrifft Verfahren, eine Vorrichtung und ein computerlesbares Speichermedium zum Generieren und/oder Anwenden eines digitalen Zertifikats, bei dem zumindest eine digitale Information in dem digitalen Zertifikat vorliegt, wobei auf Basis zumindest der zumindest einen digitalen Information ein ausführbarer Code bereitgestellt und bei Ausführen des ausführbaren Codes durch ein Gerät zumindest ein Teil einer Prüffunktion durchgeführt werden kann.

## Beschreibung

Die Erfindung betrifft Verfahren und Vorrichtungen zum Generieren und Anwenden eines digitalen Zertifikats.

Aufgrund einer Zunahme einer Vernetzung von Geräten, einer Kommunikation zwischen Menschen und von web-basierten Services nimmt eine Authentifizierung eines Benutzers, eines Geräts und/oder eines Services mittels digitaler Zertifikate an Bedeutung zu. Jedoch werden technische Werkzeuge immer effizienter digitale Zertifikate zu kompromittieren. Experten befürchten, dass viele der heute eingesetzten digitalen Zertifikate in der Zukunft durch Quantencomputer, d.h. im Post-Quantum-Zeitalter, kompromittiert werden können. Diese Problematik betrifft insbesondere die digitalen Zertifikate, die durch Geräte ausgewertet werden, die nicht durch einen Patch upgradbar sind.

Daher ist es eine Aufgabe der folgenden Erfindung, Verfahren und Vorrichtungen anzugeben, die digitale Zertifikate bereits heute für das Post-Quantum Zeitalter sicher einsetzbar machen.

Diese Aufgabe wird durch die unabhängigen Ansprüche gelöst. Weiterbildungen der Erfindung sind den abhängigen Ansprüchen zu entnehmen.

Die Erfindung betrifft ein Verfahren zum Generieren eines digitalen Zertifikats,
bei dem zumindest eine digitale Information in das digitale Zertifikat eingefügt wird, wobei auf Basis zumindest der zumindest einen digitalen Information ein ausführbarer Code (CODE) bereitgestellt und bei Ausführen des ausführbaren Codes durch ein Gerät zumindest ein Teil einer Prüffunktion durchgeführt werden kann.

Ferner betrifft die Erfindung ein Verfahren zum Anwenden eines digitalen Zertifikats, wobei das digitale Zertifikat zumindest eine digitale Information aufweist, mit folgenden Schritten:
- Bereitstellen eines ausführbaren Codes auf Basis der zumindest einen digitalen Information;
- Durchführen zumindest eines Teils einer Prüffunktion durch Ausführen des ausführbaren Codes durch ein Gerät (DEV).

Der ausführbare Code, der zur Durchführung zumindest eines Teils einer Prüffunktion ausgeführt wird, betrifft vorzugsweise die Gültigkeitsprüfung des digitalen Zertifikats, in dem die digitale Information enthalten ist, oder eine Gültigkeitsprüfung einer Zertifikatskette, in dem dieses Zertifikat enthalten ist, oder eine Gültigkeitsprüfung eines Zertifikats dieser Zertifikatskette.

Diese Verfahren zeigen unter Anderem den Vorteil, dass das digitale Zertifikat durch den ausführbaren Code flexibel zur Prüfung einer Authentizität durch das Gerät eingesetzt werden kann. Hierdurch wird erreicht, dass das digitale Zertifikat auch Sicherheitsanforderungen des Post-Quantum-Zeitalters erfüllen kann. Ein weiterer Vorteil ist darin zusehen, dass aufgrund des flexibel gestalteten digitalen Zertifikats ein aufwendiges Softwareupdate des Geräts vermieden werden kann, um eine durch die Software des Geräts realisierte Prüffunktion upzudaten. Ferner wird durch die Erfindung eine Migration auf neue Krypto-Verfahren im laufenden Betrieb der Sicherheits-Infrastrukturen, insbesondere der Public-Key Infrastrukturen (PKI), oder der verwendeten Geräte gewährleistet, und es können Betriebsunterbrechungen vermieden werden. Ferner ist vorteilhaft, dass bei Entdeckung von Schwachstellen des digitalen Zertifikats der ausführbare Code derart ausgestaltet sein kann, dass dieser hierauf individuell reagieren kann und die Sicherheitsanforderungen an das digitale Zertifikat auch für die Zukunft gewährleisten kann. Weiterhin kann die Prüffunktionalität vereinfacht werden gegenüber einer generischen Prüffunktionalität für beliebige Zertifikatsformate, da nur die tatsächlich im konkreten Fall erforderliche Prüffunktionalität entsprechend den tatsächlich verwendeten Zertifikatserweiterungen und Zertifikatsinhalten realisiert werden muss.

Zum Gewährleisten einer langfristigen Sicherheit können mit der Erfindung bereits heute digitale Zertifikate zur Verfügung gestellt werden, die post-quantum (PQC) sichere Signaturen enthalten, insbesondere auch in der Form von Hybrid-Zertifikaten. Diese enthalten sowohl eine klassische als auch eine PQC Signatur. Dadurch kann ein Übergang von der Vor-Postquantum Zeit in die Post-Quantum Zeit ermöglicht werden, ohne dass alle Geräte heute schon die PQC-Verfahren beherrschen müssen.

Als ein weiterer Vorteil wird angesehen, dass im Falle eines Bruchs des einen Algorithmus, der jeweils andere noch zur Verfügung steht (z.B. durch Existenz eines Quantencomputers wird der klassische Algorithmus gebrochen, oder der PQC-Algorithmus wird durch Fortschritte in der Kryptoanalyse gebrochen). Unter dem Begriff Bruch wird beispielsweise ein erfolgreicher Angriff auf einen Algorithmus, eine Kompromittierung eines Algorithmus oder ein Algorithmus, der nicht mehr als sicher oder einsetzbar angesehen wird (z.B. aufgrund von Fortschritten in der Kryptanalyse oder wegen regulativer Erfordernisse), verstanden. Um diese Vorteile ausnutzen zu können, enthalten die Prüffunktionen, die in einer Prüflogik implementiert sind, komplexe Regeln, wie z.B.
- Bis zum 31.12.2028 ist die Signatur mit dem klassischen Algorithmus in jedem Fall gültig, außer das Zertifikat wurde zurückgezogen. Die PQC-Signatur muss nicht geprüft werden.
- Ab dem 1.1.2029 müssen beide Signaturen geprüft werden.
- Sobald ein Quantencomputer ausreichender Rechenkapazität existiert, gilt das Zertifikat nur noch für 2 Wochen.

Diese komplexen Regeln können mittels des ausführbaren Codes realisiert und implementiert werden.

Ein weiterer Vorteil des jeweiligen Verfahrens ist, dass eine starre Zuordnung zwischen Zertifikatsinformationen, die im digitalen Zertifikat vorliegen, und Prüflogik, die (i) in dem Gerät enthalten ist und (ii) die "starren" Zertifikatsinformationen interpretieren und (iii) mittels einer oder mehrerer Prüffunktion ausführen muss, vermieden werden kann. Das bedeutet insbesondere, dass durch den ausführbaren Code erreicht wird, dass "neue" kritische Erweiterungen des digitalen Zertifikats, die bislang mit der Prüflogik "alter" Geräten inkompatibel sind und von diesen Geräten bisher immer als ungültig gewertet und abgelehnt werden, auch bei diesen Geräten inhaltlich ausgewertet und damit akzeptiert werden können.

Gemäß [1] wird unter einem digitalen Zertifikat "ein digitaler Datensatz" verstanden, mittels dem "bestimmte Eigenschaften von Personen oder Objekten bestätigt und dessen Authentizität und Integrität durch kryptografische Verfahren geprüft werden" können. "Das digitale Zertifikat enthält insbesondere die zu seiner Prüfung erforderlichen Daten. Die Ausstellung des Zertifikats erfolgt durch eine offizielle Zertifizierungsstelle, die Certification Authority (CA)". Das Objekt bezieht sich beispielsweise auf ein Gerät oder einen Softwareprozess, welcher auf dem Gerät ausgeführt werden kann.

Unter einem Begriff "digitale Information" wird ein Teil des digitalen Datensatzes, insbesondere mit einer spezifischen Information wie Name des Ausstellers, Gültigkeitsdauer des digitalen Zertifikats oder der ausführbare Code, verstanden. So kann bei Verwendung eines Standards, wie ITU-T X.509 (ISO/IEC 9594-8), die jeweilige digitale Information in Form von Attributen und konkreten Werten vorliegen. Ein RFC 5755 der Internet Engineering Task Force (IETF) definiert beispielsweise Standardwerte für die digitale Information, siehe in RFC 5755 Kapitel 4.1.

Im Rahmen der Erfindung wird unter dem Begriff "ausführbarer Code" eine Abfolge von einem oder mehreren Befehlen oder Instruktionen verstanden, die ein Prozessor des Geräts, ggfs. bzw. insbesondere unter Zuhilfenahme eines Hilfsprogramms, ausführen kann. Als ein Beispiel wird auf [2] verwiesen, bei dem das Hilfsprogramm ein Interpreter ist, der selbst durch den Prozessor ausgeführt wird, und der die Abfolge der Befehle ausführt. Der Interpreter kann auch als virtuelle Maschine oder Just-in-Time-Compiler ausgebildet sein. Die Befehle können gemäß einem Standard oder einer als allgemein verwendete Programmiersprache ausgebildet sein, wie beispielweise Perl, Python, Lua, Forth oder Basic. Der Interpreter übersetzt die Befehle in eine Abfolge von Funktionen oder Funktionsaufrufen, die der Prozessor ausführen kann. Der Interpreter kann die Befehle und/oder die Funktionen oder Funktionsaufrufe auch in einen für den Prozessor maschinenlesbaren Code übersetzen, den der Prozessor ausführt. Die Befehle können auch als Bytecode vorliegen, den, wie beispielhaft in [2] oder [3] erläutert, ein Bytecode Interpreter verarbeiten kann. Weitere bekannte Implementierungen eines Bytecodes sind Java Bytecode, Microsoft Common Language Runtime, LLVM (low-level virtual machine), Ethereum VM und WebAssembly. In einem weiteren Beispiel kann der ausführbare Code auch in Form eines maschinenlesbaren Codes vorliegen, den der Prozessor lesen und direkt ausführen kann.

Unter dem Begriff "bereitstellen" wird im Rahmen der vorliegenden Beschreibung verstanden, dass die zumindest eine digitale Information dazu ausgestaltet ist, den ausführbaren Code für eine Ausführung bereitzustellen. Dies kann beispielsweise dadurch erfolgen, dass der ausführbare Code Teil der zumindest einen digitalen Information ist, durch die zumindest eine digitale Information generiert werden kann oder die zumindest eine digitale Information eine Resourceninformation, wie beispielsweise eine Internet-Adresse aufweist, an der der ausführbare Code zur Ausführung durch das Gerät bereitgestellt werden kann.

Der Begriff "Ausführen des ausführbaren Codes" bezeichnet ein Ausführen einzelner Befehle oder Instruktionen des ausführbaren Codes, beispielsweise mit Hilfe eines Interpreters oder bei Vorliegen eines maschinenlesbaren Codes direkt durch den Prozessor, wie zuvor beschrieben.

Im Rahmen der Beschreibung wird unter "zumindest ein Teil einer Prüffunktion" eine Vorgehensweise verstanden, bei der beispielsweise eine oder mehrere Prüfschritte zur Ermittlung einer Authentizität und/oder Integrität einer Person oder eines Objekts durchgeführt werden. Alternativ oder ergänzend kann unter "zumindest ein Teil einer Prüffunktion" auch eine Bereitstellung von zumindest einem Parameter für die Prüfung der Authentizität und/oder der Integrität verstanden werden, wie beispielsweise eine Liste von zugelassenen Verschlüsselungsalgorithmen. Diesen Parameter verwendet der Prozessor dann beim Ausführen eines weiteren Prüfschritts, der, durch eine weitere der digitalen Informationen des digitalen Zertifikats initiiert, ausgeführt wird. Im Allgemeinen umfasst "zumindest ein Teil einer Prüffunktion" zumindest einen Prüfschritt einer Prüflogik bei einer Ermittlung der Authentizität und/oder der Integrität, beispielsweise bei der Ermittlung zusammen mit einem oder mehreren der weiteren digitalen Informationen. Zudem kann der Parameter auch zum Überschreiben einer der digitalen Informationen des digitalen Zertifikats eingesetzt werden, welche nachfolgend in einer der Prüffunktionen verwendet werden kann.

Durch die Verfahren wird ferner in vorteilhafter Weise erreicht, dass nicht die gesamte Prüflogik auf dem Gerät, das das digitale Zertifikat verarbeitet, vorliegen muss, da ein Teil der Prüflogik durch den ausführbaren Code in Form zumindest eines Teils einer Prüffunktion bereitgestellt und ausgeführt werden kann.

In einer vorzugsweisen Weiterbildung der Erfindung weist die zumindest eine digitale Information zumindest den ausführbaren Code auf. Somit ist der ausführbare Code direkt in der zumindest einen digitalen Information enthalten und kann hierdurch in einfacher und schneller Art und Weise bereitgestellt werden.

In einer vorteilhaften alternativen Weiterbildung der Erfindung weist zum Bereitstellen die zumindest eine digitale Information auf:
a) einen Uniform Resource Identifier zur Identifizierung einer abstrakten oder physischen Ressource, an der der ausführbare Code zum Bereitstellen abgerufen werden kann; und/oder
b) einen weiteren ausführbaren Code aufweisend eine oder mehrere Instruktionen, wobei durch Ausführen des Weiteren ausführbaren Codes (WCOD) der ausführbare Code (CODE) bereitstellt werden kann.

Diese vorteilhafte Weiterbildung ermöglicht, dass der ausführbare Code dynamisch bereitgestellt werden kann. So kann mithilfe des Uniform Resource Identifiers (zu Deutsch: einheitlicher Bezeichner für Ressourcen) der ausführbare Code durch Zugriff auf einen, insbesondere vertrauenswürdigen, Server bereitgestellt werden, der den ausführbaren Code in Abhängigkeit, beispielsweise einer Leistungsfähigkeit von Quantencomputern, anpassen und zum Abrufen (im Englischen: downloading) durch das Gerät zur Verfügung stellen kann.

Im Rahmen dieser Anmeldung wird unter dem Begriff "Uniform Resource Identifier" eine Identifikation verstanden, mit der der ausführbare Code an einer abstrakten oder physischen Ressource zum Abrufen bereitgestellt werden kann. Dokument [4] beschreibt eine derartige Identifikation beispielhaft.

Der weitere ausführbare Code kann analog zu den Ausführungen des ausführbaren Codes ausgestaltet, erzeugt und ausgeführt werden.

Ferner kann die zumindest eine digitale Information oder eine weitere der digitalen Informationen eine Nutzungsinformation aufweisen, wobei die Nutzungsinformation angibt, wie häufig und/oder wann der ausführbare Code, insbesondere auf Basis des Uniform Resource Identifiers oder des Weiteren ausführbaren Codes (WCOD), bereitgestellt werden kann oder darf.

Durch diese Weiterbildung wird eine Sicherheit bei Durchführen des jeweiligen erfindungsgemäßen Verfahrens verbessert, weil die Bereitstellung gegenüber einer missbräuchlichen Nutzung, in Bezug auf wie häufig der Code und/oder wann bzw. bis wann der ausführbare Code bereitgestellt werden kann, geschützt wird.

In einer vorteilhaften Weiterbildung der Erfindung weist die zumindest eine digitale Information oder eine weitere der digitalen Informationen eine Codekennung auf, die dazu eingerichtet ist, dem Gerät anzuzeigen, nach welcher Vorschrift der ausführbare Code und/oder der weitere ausführbare Code codiert sind. Durch diese vorteilhafte Weiterbildung wird eine Flexibilität des jeweiligen Verfahrens weiter erhöht, weil nicht nur eine fix vorgegebene Art und Weise einer Kodierung des ausführbaren Codes bzw. des Weiteren ausführbaren Codes vorgegeben wird, sondern diese Kodierung mithilfe der Codekennung flexibel ausgestaltet werden kann. So kann diese Codekennung beispielweise gemäß einem Code gemäß dem FOURCC (FOURCC: Four Character Code, siehe beispielsweise https://en.wikipedia.org/wiki/FourCC), einem Media Typ (früher auch als MIME type bezeichnet) (English: Media Type, siehe https://www.iana.org/assignments /media-types/media-types.xhtml) oder einer magischen Nummer (Englisch: Magic Number, siehe beispielsweise Abschnitt "magic number" in https://en.wikipedia.org/wiki/File_format) realisiert werden.

Das jeweilige Verfahren kann ferner in vorteilhafter Art und Weise dahingehend weitergebildet werden, dass das Ausführen des ausführbaren Codes und/oder der weiteren ausführbaren Codes erst dann durchführbar ist, wenn eine Zulässigkeit des Ausführens auf Basis einer Whitelist, einer Blacklist und/oder einer zusätzlichen Signatur positiv geprüft worden ist. Hierdurch kann kurzfristig auf eine Kompromittierung zumindest eines Teils des digitalen Zertifikats und des ausführbaren Codes bzw. des Weiteren ausführbaren Codes reagiert werden. Zudem erlaubt diese Weiterbildung auch ein zuverlässiges Nutzen des digitalen Zertifikats in dem Post Quantum Zeitalter, weil das Ausführen des (weiteren) ausführbaren Codes bei Vorliegen einer Kompromittierung des (weiteren) ausführbaren Codes unterbunden werden kann.

Vorteilhafterweise wird beim Ausführen des ausführbaren Codes und/oder des Weiteren ausführbaren Codes zumindest eine Geräteinformation berücksichtigt, wobei die zumindest eine Geräteinformation eine Eigenschaft des Geräts oder eines weiteren Geräts, das das digitale Zertifikat zur Verfügung stellt, aufweist. Hierdurch wird eine Sicherheit beim Ausführen des jeweiligen Codes verbessert, weil auf aktuelle Eigenschaften des Geräts oder des weiteren Geräts, wie beispielsweise ein Server, der den ausführbaren Code zur Verfügung stellt, eingegangen werden kann. Beispielsweise werden je nach Eigenschaft des Geräts unterschiedliche Prüffunktionen ausgeführt. Die Geräteinformation kann eine feste, unveränderliche Geräteinformation oder eine vorgebbare oder eine konfigurierbare Geräteinformation sein.

So kann die zumindest eine Geräteinformation des Geräts und/oder des weiteren Geräts folgende Information angeben:
- Aktuelle Uhrzeit und/oder aktuelles Datum
- Kommunikationsadresse, insbesondere eine IP-Adresse;
- Geographischer Ort, insbesondere nach Längen- und Breitengrad;
- Eine Geräteidentifizierung;
- Eine von einem Anwender über eine Konfigurationsschnittstelle änderbare Gerätekonfigurationsinformation.

Beispielsweise werden in Abhängigkeit von dem geographischen Ort des Geräts unterschiedliche Prüffunktionen ausgeführt. So kann bei Ausführung an einem unsicheren Ort oder Land ein kryptographischer Algorithmus eingesetzt werden, der schwerer zu manipulieren ist als einer im Labor des Herstellers. Ferner kann in Abhängigkeit der IP-Adresse des weiteren Geräts die ausführende Prüffunktionen ausgewählt werden. Handelt es sich bei der IP-Adresse (IP-Internet Protocol, z.B. nach Version 4 oder 6) um eine Adresse eines Internetcafes, dann wird eine erste Prüffunktion und bei der Internetadresse einer staatlichen Behörde eine zweite Prüffunktion ausgeführt. Unter der Geräteidentifikation kann eine Angabe eines Herstellers, eines Modells, einer Seriennummer und/oder einer Firmware-Version des Geräts verstanden werden. Unter dem Begriff Gerätekonfigurationsinformation ist eine Information zu verstehen, die eine Änderung einer Konfiguration des Geräts bewirken kann, wie beispielsweise eine Freischaltung eines Ports, einer Gerätschnittstelle oder auch eines Betriebs des Geräts im Administrator Modus.

In einer vorteilhaften Weiterbildung der Erfindung wird beim Ausführen des ausführbaren Codes und/oder des Weiteren ausführbaren Codes auf zumindest eine Zusatzinformation des digitalen Zertifikats zugegriffen, wobei die zumindest eine Zusatzinformation zusammen mit dem digitalen Zertifikat dem Gerät zur Verfügung gestellt wird und die zumindest eine Zusatzinformation anzeigt, welche der zumindest einen digitalen Information des digitalen Zertifikats als gültig angezeigt werden. Hierdurch kann sowohl eine Flexibilität beim Ausführen des ausführbaren Codes als auch eine Sicherheit des digitalen Zertifikats verbessert werden. Dies ist insbesondere von Vorteil, wenn der ausführbare Code und/oder der weitere ausführbare Code für eine Vielzahl von Zertifikaten einheitlich ist, und durch die zumindest eine Zusatzinformation des digitalen Zertifikats parametrisiert werden soll. Beispielsweise kann es sich bei der Zusatzinformation um ein Landeskennzeichen handeln, und der ausführbare Code wählt abhängig davon eine landesspezifische Prüflogik aus.

Weist der ausführbare Code einen ersten und mehrere zweite Codeabschnitte auf, wobei beim Ausführen zunächst der erste Codeabschnitt eine Auswahl derart ermöglicht, welcher der mehreren zweiten Codeabschnitte nachfolgend ausgeführt werden soll, so kann in vorteilhafter Weise sehr flexibel das Ausführen des ausführbaren Codes und/oder des Weiteren ausführbaren Codes gestaltet werden. So kann der jeweilige Code in seinen zwei zweiten Codeabschnitten eine spezifische Prüffunktion in unterschiedlichen Kodierungen bereithalten, beispielsweise eine erste in Maschinencode für eine ARM9 64-bit Architektur und eine zweite in Perl. Zur Ausführung prüft das Gerät mittels des ersten Codeabschnitts, welche der beiden Kodierungen unterstützt werden und führt dann denn Maschinencode aus, falls der Prozessor des Geräts diesen unterstützt, ansonsten den Perl-Code, der mit einem Interpreter unterstützt ausgeführt wird. Diese Vorgehensweise zeigt den Vorteil, dass das Gerät während der Laufzeit denjenigen zweiten Codeabschnitt wählen kann der mit weniger Ressourcen und/oder schneller ausgeführt werden kann, wie beispielsweise der Maschinencode gegenüber dem Perl-Code.

In einer Weiterbildung weisen die zweiten Codeabschnitte zumindest teilweise unterschiedliche Prüffunktionen auf. Hierdurch kann das Gerät bei Ausführung des ausführbaren Codes und/oder des Weiteren ausführbaren Codes auf lokale Gegebenheiten des Geräts während der Ausführung reagieren. Beispielsweise ist dem Gerät bekannt, dass ein spezifischer kryptographischer Algorithmus nicht mehr sicher ist. Somit kann bei der Ausführung des ausführbaren Codes und/oder des Weiteren ausführbaren Codes diese Gegebenheit geprüft werden und die Ausführung wird dann in Abhängigkeit dieser Gegebenheit mit der Prüffunktion fortgesetzt, die einen noch sicheren kryptografischen Algorithmus einsetzt.

In einer vorzugsweisen Variante der Erfindung werden der ausführbare Code und/oder der weitere ausführbare Code gemäß einer Interpretersprache, insbesondere als Bytecode, ausgestaltet. Hiermit kann insbesondere eine geräteunabhängige Implementierung der Erfindung gewährleistet werden, weil der jeweilige Code plattformunabhängig, wie beispielsweise für beliebige Betriebssysteme oder Hardware, ausführbar ist.

Von besonderem Vorteil ist, dass die Erfindung und somit das Verfahren in einem Zertifikatsstandard, insbesondere nach ITU X.509 und insbesondere in einer Zertifikatserweiterung nach ITU X.509, eingesetzt werden kann. Hiermit kann die Erfindung Standard-konform implementiert werden. Ferner kann eine auf dem Gerät implementierte Prüflogik das Verfahren ignorieren, falls sie eine verwendete Syntax, die den ausführbaren Code und/oder den weiteren ausführbaren Code und/oder den Uniform Resource Identifier als Teil des Zertifikatsstandards ankündigt, nicht realisieren kann.

Die jeweiligen Verfahren können als computerimplementiertes Verfahren mit den beschriebenen Schritten realisiert werden.

Neben dem Verfahren zum Generieren bzw. dem Verfahren zum Anwenden betrifft die Erfindung auch eine Vorrichtung mit zumindest einer Einheit, wobei diese Einheit eingerichtet ist, die Schritte des Verfahrens gemäß einem der Ansprüche 1 bis 14 zu implementieren und auszuführen. Die Vorrichtung kann als Vorrichtung zur Datenverarbeitung ausgestaltet sein. Die zumindest eine Einheit kann in Software, Hardware und/oder in einer Kombination aus Soft- und Hardware ausgebildet sein. Ferner kann die zumindest eine Einheit einen Prozessor, einen Speicher aufweisend einen oder mehrere maschinenlesbare Instruktionen gemäß den obigen Schritten und einen Bus zum Datenaustausch zwischen Prozessor und Speicher aufweisen. Zudem kann der Bus mit Ein- und Ausgabeeinheiten verbunden sein, die einen Datenaustausch von und nach der zumindest einen Einheit, wie beispielweise einen Empfang des digitalen Zertifikates, ermöglichen.

Schließlich umfasst die Erfindung auch ein computerlesbares Speichermedium umfassend zumindest eine digitale Information eines digitalen Zertifikats, wobei durch die zumindest eine digitale Information zumindest eine Anweisung für einen Computer in Form von Befehlen ausbildbar ist, wobei die Befehle bei der Ausführung durch einen Computer diesen veranlassen, das Verfahren nach einem der Ansprüche 1 bis 14 auszuführen. Die Vorrichtung und das computerlesbare Speichermedium bewirken dieselben Vorteile wie diejenigen des jeweiligen Verfahrens.

Die Erfindung und ihre Weiterbildungen werden anhand nachfolgender Figuren näher erläutert. Diese Figuren zeigen im Einzelnen:
- Figur 1: System zum Durchführen der Erfindung
- Figur 2: Ausschnitt eines digitalen Zertifikates aufweisend einen Bytecode zur Bereitstellung eines ausführbaren Codes
- Figur 3: Ablaufdiagramm zumindest einer Prüffunktion eines ausführbaren Codes

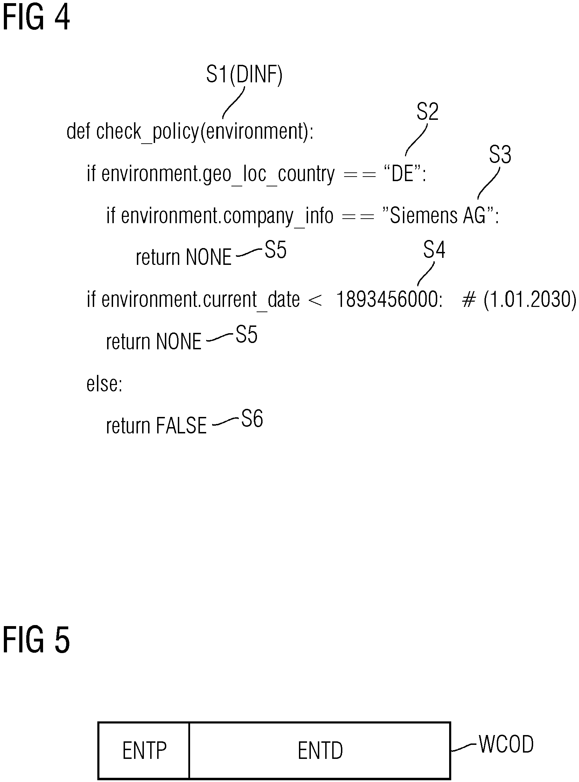

- Figur 4: Repräsentation der Prüffunktion des ausführbaren Codes mit Anweisungen in Python
- Figur 5: Aufbau eines weiteren Codes, der neben einem Entschlüsselungsprogramm auch einen zu entschlüsselnden ausführbaren Code in einem Datenfeld aufweist
- Figur 6: Ausschnitt eines digitalen Zertifikates aufweisend einen Uniform Resource Identifitier zur Bereitstellung eines ausführbaren Codes

Elemente mit gleicher Funktion und Wirkungsweise sind in den Figuren mit denselben Bezugszeichen versehen.

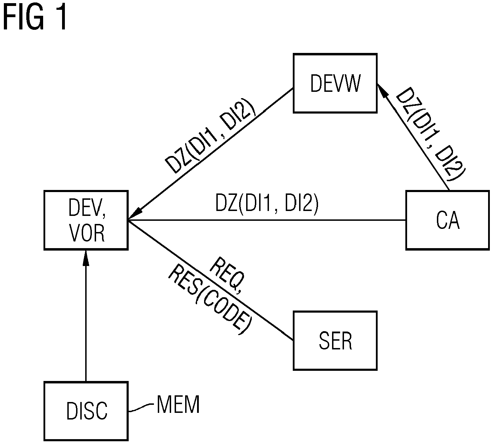

Ein erstes Ausführungsbeispiel wird anhand von Figur 1 erläutert. Dabei bekommt ein Gerät DEV, auch als Vorrichtung VOR bezeichnet, beispielsweise ein Roboter in einer Produktionsanlage, von einer vertrauenswürdigen Einheit, wie beispielsweise einer Certification Authority CA, ein digitales Zertifikat DZ übermittelt. Die vertrauenswürdige Einheit implementiert und führt das erfindungsgemäße Verfahren zum Generieren des digitalen Zertifikats aus, wohingegen das Gerät das erfindungsgemäße Verfahren zum Anwenden des digitalen Zertifikats implementiert und ausführt. Alternativ kann das digitale Zertifikat von einem weiteren Gerät DEVW stammen, das dem Gerät einen Service anbietet. Das weitere Gerät hat sein Zertifikat von der vertrauenswürdigen Einheit CA vorab zugestellt bekommen.

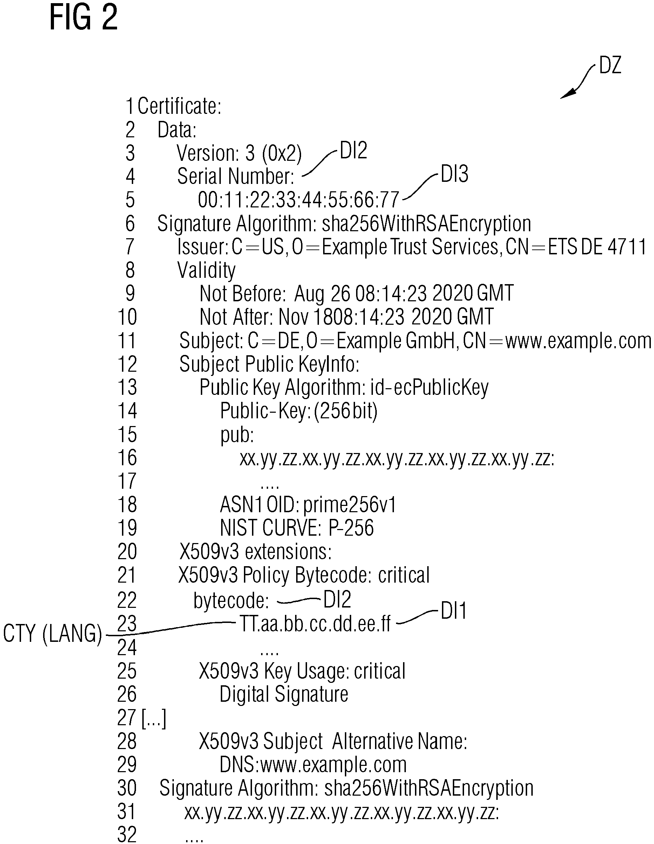

Ein beispielhafter Ausschnitt für ein derartiges digitales Zertifikat ist in Figur 2 abgebildet. Figur 2 weist Zeilenangaben auf, die lediglich für eine bessere Lesbarkeit eingefügt worden sind. Dieses digitale Zertifikat zeigt typische Informationen, wie Name des Ausstellers "Issuer", Gültigkeitsdauer des digitalen Zertifikates "Validity" oder auch Public Key Informationen "Subject Public Key info". Die jeweiligen Informationen des digitalen Zertifikats werden als digitale Informationen DI1, DI2, DI3 bezeichnet, wobei diese sowohl Attribute des digitalen Zertifikates beschreiben können, wie beispielsweise "version" oder "serial Number", als auch deren konkrete Inhalte, wie beispielsweise "3 (0x2)" oder "Aug 26 08:14:23 2020 GMT". Das digitale Zertifikat gemäß Figur 2 zeigt noch Erweiterungen gemäß einem Standard ITU-T X.509 Version 3 auf, siehe Zeilen 20 und 25 bis 29.

Wenn dieses digitale Zertifikat, z.B. ein Zertifikat im X.509-Format, in einer technischen Einrichtung wie dem Gerät auf seine Gültigkeit überprüft wird, muss das Gerät eine ganze Reihe von Prüfungen durchführen. Diese Prüfungen realisiert in einer oder mehreren Prüffunktionen umfassen sowohl kryptographische Methoden, wie beispielsweise die Überprüfung von digitalen Signaturen, als auch nicht-kryptographische Methoden, wie beispielsweise eine Überprüfung, ob das aktuelle Datum im Gültigkeitszeitraum des Zertifikats liegt oder eine Validierung von Zertifikatsfeldern, wie Namen und Zertifikats-Erweiterungen.

Abstrakt gesehen werden dabei die digitalen Informationen, die im Zertifikat vorliegen, als Eingabedaten für die jeweilige Prüffunktionen verwendet, die im Gerät zur Anwendung implementiert vorliegen. Die Prüflogik, die aus einer oder mehreren Prüffunktionen besteht, wird im Gerät Schritt für Schritt abgearbeitet. Dafür kennt das Gerät die Semantik der Einzelinformation, d.h. die digitalen Informationen des digitalen Zertifikats, die im Zertifikat abgelegt ist, um die Einzelinformation korrekt überprüfen zu können. Hierzu kann das Gerät ein Programm aufweisen, das dazu geeignet ist, die Eingabefunktionen zu verarbeiten, ggfs. basierend auf einer standardisierten Beschreibung, wie beispielsweise ITU-T X.509. Die jeweiligen Prüffunktionen können Rückgabewerte über ein Ergebnis ihrer Prüfung liefern, wie beispielsweise "nicht erfolgreich" oder "erfolgreich". Abhängig von diesem Ergebnis bzw. Rückgabewert kann die Ausführung der Prüflogik abgebrochen werden, weil das Ergebnis der betrachteten Prüffunktion "nicht erfolgreich" ist und daher die Autorisierung oder die Integrität basierend auf dem digitalen Zertifikat nicht erfolgreich ist. Falls das Prüfergebnis "erfolgreich" anzeigt, so kann das Gerät weitere Prüffunktionen der Prüflogik ausführen, um die Authentizität und/oder die Integrität basierend auf dem digitalen Zertifikat nach Abschluss aller Prüffunktion zu bestätigen bzw. nicht zu bestätigen.

Das digitale Zertifikat gemäß Figur 2 zeigt ferner eine erfindungsgemäße Erweiterung in den Zeilen 22 und 23 auf. Die digitale Information DI2 in Zeile 22 gibt ein Attribut vom Typ "Bytecode" an, wobei hierdurch angezeigt wird, dass nachfolgend, also die digitale Information DI1 in Zeile 23, ein in Bytecode codierter ausführbarer Code im digitalen Zertifikat eingefügt ist. Dieser ist in Figur 2 als Zeichenkette "TT.aa.bb.cc.dd.ee.ff" symbolisch dargestellt, wobei jeweils zwei Buchstaben aa, bb oder cc jeweils ein Byte beschreiben und ein jeweiliger Punkt zwischen jeweils zwei Buchstaben nur zu besseren Lesbarkeit eingefügt ist. Das erste Bye TT gibt eine Codekennung CTYP an, in welcher Art und Weise, also nach welcher Vorschrift LANG, der nachfolgende Bytecode codiert ist, wie beispielsweise nach JAVA oder Microsoft Common Language. Die Bytes aa, bb, cc, dd, ee, ff beschreiben jeweils einen Befehl, den ein Prozessor des Geräts in einen maschinenlesbaren Befehl ausführen kann.

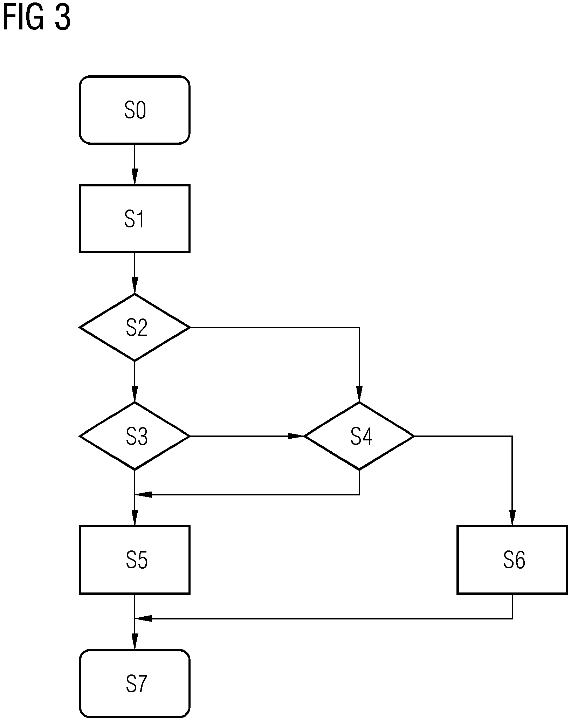

In einem Beispiel für einen ausführbaren Code soll das Gültigkeitsdatum des Zertifikats an einen Aufenthaltsort des Geräts oder an eine Organisation, in dem das Gerät beheimatet ist, angepasst werden. Ist der Aufenthaltsort Deutschland, abgekürzt mit DE und die Organisation Siemens AG, dann kann das Zertifikat solange benutzt werden, bis dieses regulär, also wie im Zertifikat angegeben, verwendet werden, ansonsten maximal bis 1.1.2030. Mit Hilfe von Figur 3 wird das Beispiel anhand eines Ablaufdiagramms erläutert. Dieses startet im Schritt S0 und endet im Schritt S7.

In einem ersten Schritt S1 ermittelt das Gerät Geräteinformationen DINF des Geräts DEV, wobei die Geräteinformationen Informationen über eine Ausführungsumgebung des Geräts aufweisen, und im Beispiel in einer Struktur mit einem Namen environment vorliegen. Diese zeigt:
- *environment.current*_*date* enthält einen Wert 1616420061 für eine aktuelle Zeit (in Sekunden seit 1.01.1970, also als Unix-Timestamp);
- *environment.geo_loc_country_code* enthält "DE" als aktuelles Land, in dem sich das Gerät gerade aufhält bzw. installiert ist (den Alpha-2-code nach ISO 3166-1) und bezeichnet Deutschland;
- *environment.company_info* enthält eine Angabe zu welcher Organisation oder Firma das Gerät zugeordnet ist, welches im Beispiel mit dem Wert "Siemens Energy" belegt ist;

In einem nächsten Schritt S2 wird überprüft, ob *environment.geo_loc_country_code, also das Land, in dem sich das Gerät befindet,* gleich DE (=Deutschland) ist oder nicht. Da dies der Fall ist wird das Ablaufdiagramm im Schritt S3 fortgesetzt, ansonsten im Schritt S4.

Im Schritt S3 erfolgt eine weitere Prüfung, ob die Organisation der Siemens AG entspricht oder nicht. Da *environment.company_info* gleich Siemens Energy ist, ist der Vergleich mit Siemens AG nicht positiv. Somit wird das Ablaufdiagramm im Schritt S4 weitergeführt, ansonsten im Schritt S5.

Im Schritt S4 wird das aktuelle Datum, siehe *environment.current*_*date,* mit dem maximalen zulässigen Datum 1.1.2030 verglichen. Ist das aktuelle Datum kleiner als der 1.1.2030, d.h. das maximal zulässige Datum ist aktuell noch nicht erreicht oder überschritten, so folgt nach Schritt S4 der Schritt S5, ansonsten ein Schritt S6.

Im Schritt S5 liefert der ausführbare Code, der in diesem Beispiel eine Prüffunktion realisiert, einen Wert NONE als Ergebnis dieses Prüfschritts zurück, der signalisiert, dass die Prüfung positiv war und weitere Prüffunktionen des digitalen Zertifikats, die nicht im ausführbaren Code realisiert sind, ferner abgeprüft werden können, um die Gültigkeit des Zertifikates zu verifizieren. Der ausführbare Code ist zumindest ein Teil der Prüflogik, die durch das digitale Zertifikat repräsentiert wird.

Im Schritt S6 liefert der ausführbare Code, der in diesem Beispiel eine Prüffunktion realisiert, einen Wert FALSCH als Ergebnis dieses Prüfschritts zurück, der signalisiert, dass die Prüfung negativ war und das Zertifikat somit nicht mehr gültig ist. Ein Ausführen von weiteren Prüffunktionen kann somit unterbleiben.

Somit können die Bytes in Figur 2 des ausführbaren Codes folgende Schritte beschreiben, wobei diese gemäß dem verwendeten Bytecode "Standard", wie beispielsweise in JAVA oder Python, spezifisch codiert wird (in der folgenden Darstellung lediglich symbolisch dargestellt):

| | |
|---|---|
| aa: | S1 |
| bb: | S2 |
| cc | S3 |
| dd: | S4 |
| ee: | S5 |
| ff: | S6 |

Mit Hilfe des ausführbaren Codes kann das digitale Zertifikat dynamisch auf spezielle Eigenschaften des zu überprüfenden Objekts, Geräts oder Person zur Ermittlung der jeweiligen Authentizität und Integrität reagieren. Insbesondere kann eine individuelle Prüffunktion der Prüflogik des digitalen Zertifikates erstellt und ausgeführt werden, ohne, dass es einer Änderung eines Standards bedarf, dem das digitale Zertifikat zugrunde liegt. Ferner kann der ausführbare Code sich auch über der Zeit ändern und somit eine Prüffunktion ausführen, die an geänderte Sicherheitsanforderungen anpassbar ist.

Anstatt den ausführbaren Code direkt in die digitale Information abzulegen, kann ein weiterer ausführbarer Code WCOD als digitale Information vorliegen, der eine Befehlsfolge aufweist, die den ausführbaren Code CODE erzeugt. Hierzu kann der weitere ausführbare Code weitere digitale Informationen des digitalen Zertifikats zur Erzeugung des ausführbaren Codes nutzen, wie beispielsweise, dass der ausführbare Code nur erzeugt wird, falls das digitale Zertifikat noch gültig ist oder weitere Prüffunktionen ein positives Prüfergebnis liefern. Gemäß einem weiteren Beispiel liegt der ausführbare Code in verschlüsselter Art und Weise in dem weiteren ausführbaren Code vor. Der weitere ausführbare Code weist ein Entschlüsselungsverfahren ENTP auf, beispielsweise als Bytecode in Perl kodiert und ferner einen Datenfeld ENTD, welches den ausführbaren Code in verschlüsselter Art und Weise umfasst. Zur Entschlüsselung kann das Entschlüsselungsverfahren zunächst eine oder mehrere digitale Informationen und/oder Geräteinformationen abprüfen und bei positiver Prüfung dann den ausführbaren Code durch Entschlüsselung bereitstellen und dessen Ausführung anstoßen.

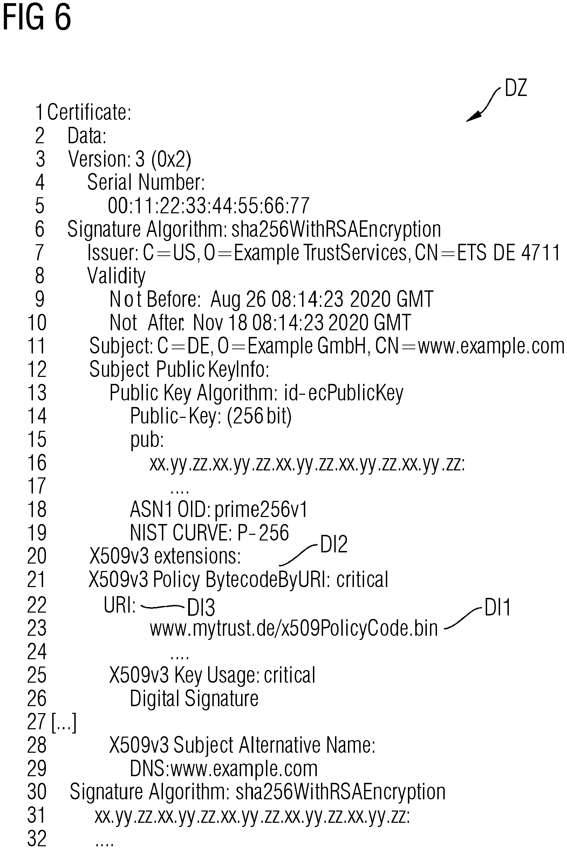

In einer alternativen oder ergänzenden Ausführungsform kann der weitere Code einen Uniform Resource Identifier URI nutzen, um den ausführbaren Code von einer vertrauenswürdigen Stelle abzurufen. Figur 6 zeigt ein digitales Zertifikat DZ bei dem in Zeile 21 mit einer digitalen Information DI2 "BytecodeByURI" angekündigt wird, dass ein ausführbarer Code (=Bytecode) mittels einer URI bereitgestellt und dann dieser ausführbare Code als zumindest ein Teil einer Prüffunktion ausgeführt werden soll. In Zeile 22 wird in einer weiteren digitalen Information DI3 "URI" angezeigt, dass nachfolgend die Ressource angeführt ist, die einen Zugriff auf den ausführbaren Code ermöglicht. Hierzu schickt das Gerät eine Anfragenachricht REQ, siehe Figure 1, an einen Server SER basierend auf einer Adresse "www.mytrust.de", die Teil einer weiteren digitalen Information DI1 "www.mytrust.de/x509PolicyCode.bin" ist. Mit der Anfragenachricht wird auch der ausführbare Code mit einer Angabe "x509PolicyCode.bin" adressiert, welcher zurückgeschickt werden soll. Der Server schickt eine Antwortnachricht RES, welche den angeforderten ausführbaren Code CODE umfasst. Diese Antwortnachricht wird vom Gerät empfangen und durch dieses der weitere ausführbare Code weiterverarbeitet. Dieser entnimmt der Antwortnachricht den ausführbaren Code und startet ihn.

In einer Weiterbildung kann eine der digitalen Informationen des digitalen Zertifikates anzeigen, in welcher Art und Weise der ausführbare Code codiert ist. Hiermit kann das Gerät vor Ausführen der Uniform Resource Identifiers URI entscheiden, ob der ausführbare Coder heruntergeladen werden soll oder nicht. Zeile 21 im Beispiel gemäß Figur 6 kann dann folgermaßen aussehen:
X509v3 Policy BytecodeByPerlByURI: critical

Hierbei wird angezeigt, dass der ausführbare Code, der mittels der Resource in Zeile 23 bereitstellbar ist, als Perlcodierter Code vorliegt, siehe Teilstring "ByPerl". Hierbei ist von Vorteil, dass das Gerät bereits vor dem Laden des ausführbaren Codes erkennen kann, ob es diesen ausführbaren Code überhaupt ausführen kann, weil beispielsweise kein passender Interpreter vorliegt. Hierdurch kann eine Durchführung der Prüflogik des digitalen Zertifikates beschleunigt und auch vereinfacht werden.

Das digitale Zertifikat weist ferner eine oder mehrere digitale Informationen auf, die eine Häufigkeit und/oder einen Zeitpunkt einer Ausführung des ausführbaren Codes, des Weiteren ausführbaren Codes und/oder des Uniform Resource Identifiers URI zu steuern bzw. zu beschränken. Hierzu wird beispielsweise bei jedem Ausführen ein Zähler inkrementiert, sodass bei Überschreiten eines vorgegebenen Maximalwertes ein erneutes Ausführen unterbunden werden kann. Alternativen kann zusätzlich auch eine Datumsangabe als weitere digitale Information in dem digitalen Zertifikat angegeben sein, die anzeigt, bis zu welchem Datum das Ausführen ermöglicht werden kann bzw. darf.

Das digitale Zertifikat kann in Form eines computerlesbaren Speichermediums DISC auf einem dem Gerät DEV, VOR angebundenen Speicher MEM abgelegt sein. Das Gerät liest das computerlesbare Speichermedium DISC und bildet auf Basis der zumindest einen digitalen Information eine Anweisung in Form von Befehlen, die durch einen Prozessor des Geräts ausführbar sind. Die Befehle werden auf Basis der zumindest einen digitalen Information derart bereitgestellt, dass damit zumindest der ausführbare Code bereitgestellt wird und durch das Gerät dann ausgeführt werden kann.

In einer alternativen oder ergänzenden Ausführungsform kann die Ausführungsumgebung vor der Abarbeitung des ausführbaren Codes oder des Weiteren ausführbaren Codes diesen Code weitern Prüfungen unterziehen. Beispielsweise kann die Ausführungsumgebung überprüfen, ob der Code in einer Whitelist oder einer Blacklist erscheint, die der Ausführungsumgebung vorliegt (z.B. durch vorherige Konfiguration oder durch Herunterladen von einer vertrauenswürdigen Quelle). Im Falle einer Whitelist wird der Code nur ausgeführt, sofern er oder eine eindeutige Referenz auf den Code in einer Whitelist enthalten ist. Die eindeutige Referenz kann z.B. durch einen kryptographischen Hashwert des Codes gegeben sein, oder durch einen URI, sofern der Code wie oben beschrieben nachgeladen wird. Im Falle einer Blacklist wird der Code nicht ausgeführt, wenn er oder eine eindeutige Referenz darauf in der Blacklist enthalten ist.

Ein weiteres Beispiel einer derartigen Überprüfung ist die Überprüfung einer digitalen Signatur, die die Integrität und/oder Authentizität des Codes sicherstellt. Beispielsweise kann die Ausführungsumgebung sicherstellen, dass nur Code ausgeführt wird, der mit Hilfe eines bestimmten Signaturschlüssels digital signiert wurde, oder dessen zugehöriges Zertifikat einer bestimmten Policy genügt.

### Literaturangaben

[1] Digitales Zertifikat, Wikipedia, siehe https://de.wikipedia.org/wiki/Digitales_Zertifikat , abgerufen am 16.03.2021
[2] Interpreter, Wikipedia, https://en.wikipedia.org/wiki/Interpreter_(computing), abgerufen am 16.03.2021
[3] Bytecode, Wikipedia, https://en.wikipedia.org/wiki/Bytecode , abgerufen am 16.03.2021
[4] Uniform Resource Identifier, Wikipedia, https://en.wikipedia.org/wiki/Uniform_Resource_Identifie r, abgerufen am 25.03.2021

## Patentansprüche

1. Verfahren zum Generieren eines digitalen Zertifikats (DZ), bei dem zumindest eine digitale Information (DI1, DI2, DI3)) in das digitale Zertifikat (DZ) eingefügt wird, wobei auf Basis zumindest der zumindest einen digitalen Information (DI1) ein ausführbarer Code (CODE) bereitgestellt und bei Ausführen des ausführbaren Codes (CODE) durch ein Gerät (DEV) zumindest ein Teil einer Prüffunktion (PF1) durchgeführt werden kann.

2. Verfahren zum Anwenden eines digitalen Zertifikats (DZ), wobei das digitale Zertifikat (DZ) zumindest eine digitale Information (DI1, DI2, DI3) aufweist, mit folgenden Schritten:
- Bereitstellen eines ausführbaren Codes (CODE) auf Basis der zumindest einen digitalen Information (DI1);
- Durchführen zumindest eines Teils einer Prüffunktion (PF1) durch Ausführen des ausführbaren Codes (CODE) durch ein Gerät (DEV).

3. Verfahren nach einem der Ansprüche 1 und 2,
bei dem die zumindest eine digitale Information (DI1) zumindest den ausführbaren Code (CODE) aufweist.

4. Verfahren nach einem der Ansprüche 1 und 2,
bei dem zum Bereitstellen die zumindest eine digitale Information (DI1) aufweist:
c) einen Uniform Resource Identifier (URI) zur Identifizierung einer abstrakten oder physischen Ressource, an der der ausführbare Code (CODE) zum Bereitstellen abgerufen werden kann; und/oder
d) einen weiteren ausführbaren Code (WCOD) aufweisend eine oder mehrerer Instruktionen (INST) gemäß einer Interpretersprache, insbesondere als Bytecode ausgestaltet, wobei durch Ausführen des Weiteren ausführbaren Codes (WCOD) der ausführbare Code (CODE) bereitstellt werden kann.

5. Verfahren nach Anspruch 4,
bei dem die zumindest eine digitale Information (DI1) oder eine weitere der digitalen Informationen (DI2) eine Nutzungsinformation (NI) aufweist, wobei die Nutzungsinformation (NI) angibt, wie häufig und/oder wann der ausführbare Code (CODE), insbesondere auf Basis des Uniform Resource Identifiers (URI) oder des Weiteren ausführbaren Codes (WCOD), bereitgestellt werden kann.

6. Verfahren nach einem der vorhergehenden Ansprüche,
bei dem die zumindest eine digitale Information (DI1) oder eine weitere der digitalen Informationen (DI2) eine Codekennung (CTYP) aufweist, die dazu eingerichtet ist, dem Gerät anzuzeigen, nach welcher Vorschrift (LANG) der ausführbare Code (CODE) und/oder der weitere ausführbare Code (WCOD) codiert sind.

7. Verfahren nach einem der vorhergehenden Ansprüche,
bei dem das Ausführen des ausführbaren Codes (CODE) und/oder der weiteren ausführbaren Codes (WCOD) erst dann durchführbar ist, wenn eine Zulässigkeit des Ausführens auf Basis einer Whitelist, einer Blacklist und/oder einer zusätzlichen Signatur positiv geprüft worden ist.

8. Verfahren nach einem der vorhergehenden Ansprüche,
bei dem beim Ausführen des ausführbaren Codes (CODE) und/oder des Weiteren ausführbaren Codes (WCOD) zumindest eine Geräteinformation (DINF) berücksichtigt wird, wobei die zumindest eine Geräteinformation (DINF) eine Eigenschaft des Geräts (DEV) oder eines weiteren Geräts (WDEV), das das digitale Zertifikat (DZ) zur Verfügung stellt, aufweist.

9. Verfahren nach Anspruch 8,
bei dem die zumindest eine Geräteinformation (DINF) des Geräts (DEV) und/oder des weiteren Geräts (WDEV) folgende Information angibt:
- Aktuelle Uhrzeit und/oder aktuelles Datum;
- Kommunikationsadresse, insbesondere eine IP-Adresse;
- Geographischer Ort, insbesondere nach Längen- und Breitengrad;
- Eine Geräteidentifizierung;
- Eine von einem Anwender über eine Konfigurationsschnittstelle änderbare Gerätekonfigurationsinformation.

10. Verfahren nach einem der vorhergehenden Ansprüche,
bei dem beim Ausführen des ausführbaren Codes (CODE) und/oder des Weiteren ausführbaren Codes (WCOD) zumindest eine Zusatzinformation (ZINF) des digitalen Zertifikats (DZ) berücksichtigt wird, wobei die zumindest eine Zusatzinformation (ZINF) zusammen mit dem digitalen Zertifikat (DZ) dem Gerät (DEV) zur Verfügung gestellt wird und die zumindest eine Zusatzinformation (ZINF) anzeigt, welche der Paramater des digitalen Zertifikats (DZ) als gültig angezeigt werden.

11. Verfahren nach einem der vorhergehenden Ansprüche,
bei dem der ausführbare Code (CODE) einen ersten und mehrere zweite Codeabschnitte (CODA, CODSEL, CODP1, CODP2) aufweist, wobei beim Ausführen zunächst der erste Codeabschnitt (CODSEL) eine Auswahl derart ermöglicht, welcher der mehreren zweiten Codeabschnitte (CODO2, CODP1) nachfolgend ausgeführt werden soll.

12. Verfahren nach Anspruch 11,
bei dem die zweiten Codeabschnitt (CODO2, CODP1) zumindest teilweise unterschiedliche Prüffunktionen (PF1, PF2) aufweisen.

13. Verfahren nach einem der vorhergehenden Ansprüche,
bei dem der ausführbare Code (CODE) gemäß einer Interpretersprache, insbesondere als Bytecode, ausgestaltet ist.

14. Verfahren nach einem der vorhergehenden Ansprüche,
bei dem das Verfahren in einem Zertifikatsstandard, insbesondere nach ITU X.509 und insbesondere in einer Zertifikatserweiterung nach ITU X.509, eingesetzt wird.

15. Vorrichtung (VOR) mit zumindest einer Einheit (UNIT), wobei diese Einheit (UNIT) eingerichtet ist, die Schritte des Verfahrens gemäß einem der Ansprüche 1 bis 14 zu implementieren und auszuführen.

16. Computerlesbares Speichermedium (DISC) umfassend zumindest eine digitale Information (DI1, DI2, DI3) eines digitalen Zertifikats (DZ), wobei durch die zumindest eine digitale Information zumindest eine Anweisung für einen Computer in Form von Befehlen ausbildbar ist, wobei die Befehle bei der Ausführung durch einen Computer diesen veranlassen, das Verfahren nach einem der Ansprüche 1 bis 14 auszuführen.
